(19) Europäisches Patentamt
European Patent Office
Office européen des brevets

(11) EP 3 268 963 B1

(12) FASCICULE DE BREVET EUROPEEN

(45) Date de publication et mention
de la délivrance du brevet:
**20.02.2019 Bulletin 2019/08**

(51) Int Cl.:
*G06T 13/20* (2011.01)          *G06T 13/40* (2011.01)
*G10L 21/10* (2013.01)

(21) Numéro de dépôt: **16713964.1**

(22) Date de dépôt: **10.03.2016**

(86) Numéro de dépôt international:
**PCT/FR2016/050547**

(87) Numéro de publication internationale:
**WO 2016/142632 (15.09.2016 Gazette 2016/37)**

(54) **DISPOSITIF DE TRAITEMENT D'IMAGE**

BILDVERARBEITUNGSVORRICHTUNG

IMAGE PROCESSING DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.03.2015 FR 1552058**

(43) Date de publication de la demande:
**17.01.2018 Bulletin 2018/03**

(73) Titulaire: **Université de Lorraine
54052 Nancy Cedex (FR)**

(72) Inventeurs:
• **OUNI, Slim
  54710 Ludres (FR)**
• **GRIS, Guillaume
  67110 Niederbronn Les Bains (FR)**

(74) Mandataire: **Cabinet Netter
36, avenue Hoche
75008 Paris (FR)**

(56) Documents cités:
EP-A2- 0 710 929          JP-A- 2007 299 300
US-A1- 2010 259 538

• GERGELY FELDHOFFER ET AL: "An efficient voice driven face animation method for cyber telepresence applications", APPLIED SCIENCES IN BIOMEDICAL AND COMMUNICATION TECHNOLOGIES, 2009. ISABEL 2009. 2ND INTERNATIONAL SYMPOSIUM ON, IEEE, PISCATAWAY, NJ, USA, 24 novembre 2009 (2009-11-24), pages 1-6, XP031596060, ISBN: 978-1-4244-4640-7
• CHANGWEI LUO ET AL: "Realtime speech-driven facial animation using Gaussian Mixture Models", 2013 IEEE INTERNATIONAL CONFERENCE ON MULTIMEDIA AND EXPO (ICME), IEEE, 14 juillet 2014 (2014-07-14), pages 1-6, XP032639336, ISSN: 1945-7871, DOI: 10.1109/ICMEW.2014.6890554 [extrait le 2014-09-03]
• HUANG D ET AL: "NURBS curve controlled modelling for facial animation", COMPUTERS AND GRAPHICS, ELSEVIER, GB, vol. 27, no. 3, 1 juin 2003 (2003-06-01), pages 373-385, XP026964761, ISSN: 0097-8493 [extrait le 2003-06-01]
• MUSTI UTPALA ET AL: "Facial 3D Shape Estimation from Images for Visual Speech Animation", INTERNATIONAL CONFERENCE ON PATTERN RECOGNITION, IEEE COMPUTER SOCIETY, US, 24 août 2014 (2014-08-24), pages 40-45, XP032698643, ISSN: 1051-4651, DOI: 10.1109/ICPR.2014.17 [extrait le 2014-12-04]

EP 3 268 963 B1

**Description**

L'invention concerne le domaine du traitement d'image et en particulier la génération d'animations automatiques synchronisées avec des voix et/ou des sons. Plus particulièrement, l'invention concerne l'animation de visages de manière réaliste.

Le domaine de l'animation des visages en synchronisation avec la parole est un domaine qui a connu de nombreux développements au fur et à mesure que la résolution des affichages a augmenté. Les documents "An efficient voice driven face animation method for cyber telepresence applications" G. Feldhoffer et al (dans Applied Sciences in Biomédical and Communication Technologies, 24/11/2009), "Realtime speech-driven facial animation using Gaussian Mixture Models" C. Luo et al (dans IEEE International Conférence on Multimedia and Expo, 14/07/2014), EP0710929A2, "NURBS Curve Controlled Modelling for Facial Animation" D. Huang et al (dans Computer and Graphics, Elsevier, 01/06/2003), US2010/259538A1, "Facial 3D Shape Estimation from Images for Visual Speech Animation" M. Utpala et al (dans IEEE International Conference on Pattern Recognition, 24/08/2014), et JP2007299300 divulguent certaines méthodes d'animation de visages en synchronisation avec la parole.

En effet, dans les premiers temps, un affichage à 8 bits ou à 16 bits ne laissait qu'un ou deux pixels pour réaliser la bouche d'un personnage dans la plupart des cas. La question de la synchronisation du visage avec un texte était alors d'autant plus facilement réglée qu'en général les pistes audios ne contenaient que de la musique au format midi, et que les dialogues étaient présentés sous forme de texte affiché sur l'écran.

Lorsque les capacités matérielles ont augmenté, il est devenu possible d'enregistrer les dialogues sous la forme de fichiers sonores reproduits, et la question de la synchronisation avec le visage du personnage est progressivement passée au premier plan.

Ce problème a été résolu par la numérisation des expressions faciales, en utilisant des points de contrôle utilisés pour animer l'ensemble du visage lors de la reproduction. Mais la résolution étant en constante augmentation, il a été nécessaire d'augmenter en parallèle le nombre de points de contrôle. En effet, pour un nombre de points de contrôle donné, l'animation est beaucoup plus crédible si la résolution est plus faible. Par exemple, si on utilise le même nombre de points de contrôle pour une résolution SD que pour une résolution HD, l'animation sera beaucoup plus crédible dans le premier cas que dans le deuxième.

Avec l'arrivée de l'Ultra HD, il n'est plus possible d'augmenter le nombre de points de contrôle permettant d'obtenir une animation suffisamment réaliste sans être significativement pénalisé en termes de stockage et de puissance vidéo à développer. De plus, l'acquisition d'un nombre toujours plus grand de points de contrôle nécessite d'utiliser de nouvelles caméras à résolution plus élevée, ce qui est coûteux.

L'invention vient améliorer la situation.

À cet effet, l'invention propose un dispositif de traitement d'image comprenant une mémoire stockant des données de son, des données de surface en trois dimensions, ainsi qu'une pluralité de jeux de données de contrôle, chaque jeu de données de contrôle représentant une pluralité de points de contrôle définis par des données de coordonnées et étant associé à des données de son, et un processeur agencé, à partir de premières et secondes données de son successives, et de premières données de surface en trois dimensions, pour sélectionner les jeux de données de contrôle associés aux premières et secondes données de son, et pour définir de secondes données de surface en trois dimensions en appliquant un déplacement à chaque point des premières données de surface en trois dimensions.

Le déplacement d'un point donné des premières données de surface en trois dimensions est calculé comme la somme de vecteurs déplacements calculés pour chaque point de contrôle du jeu de données de contrôle associé aux premières données de son, chaque vecteur déplacement calculé pour un point de contrôle donné étant calculé à partir de la somme d'un premier vecteur et d'un deuxième vecteur, laquelle somme est pondérée par un poids calculé comme le ratio entre le résultat d'une fonction à deux variables présentant une limite nulle à l'infini appliquée au point donné et au point de contrôle donné et la somme du résultat de cette fonction appliquée au point donné d'une part et à chacun des points de contrôle du jeu de données de contrôle associé aux premières données de son d'autre part.

Le premier vecteur représente le déplacement de la position définie par les données de coordonnées du point de contrôle donné dans le jeu de données de contrôle associé aux premières données vers la position définie par les données de coordonnées du point de contrôle donné dans le jeu de données de contrôle associé aux secondes données de son, et le deuxième vecteur correspond à la différence entre les données de coordonnées du point donné et les données de coordonnées du point de contrôle donné dans le jeu données de contrôle associé aux premières données de son, multiplié par un coefficient dépendant du gradient du premier vecteur.

Ce dispositif est particulièrement avantageux car il permet d'obtenir une animation dont la qualité est satisfaisante même pour un visage en très haute résolution, tout en utilisant un nombre de points de contrôle réduit.

Dans divers modes de réalisations particuliers, le dispositif peut présenter l'une ou la combinaison de plusieurs de caractéristiques suivantes :

- la fonction à deux variables associe à deux points une distance mathématique appliquée à ces deux points élevée à une puissance choisie,
- la distance mathématique est choisie dans un groupe comprenant la distance Euclidienne, la distance quadratique et la distance géodésique,
- la puissance choisie est inférieure ou égale à -1,
- le coefficient dépendant du gradient du premier vecteur est égal au gradient du premier vecteur,
- le coefficient dépendant du gradient du premier vecteur est égal au gradient du premier vecteur divisé par une valeur proportionnelle à la distance entre le point de donné et le point de contrôle donné,
- la valeur proportionnelle correspond au ratio de la distance entre le point de donné et le point de contrôle donné par une constante de déformation supérieure à 1, ce ratio étant élevé à une puissance choisie et ajouté de un,
- la puissance choisie est supérieure ou égale à 1,
- le ratio entre le nombre de points des données de surface en trois dimensions et le nombre de points dans un jeu de données de contrôle est supérieur à 50.

L'invention concerne également un produit de programme informatique, susceptible de coopérer avec un ordinateur pour mettre en oeuvre le dispositif ci-dessus.

L'objet de l'invention est défini par les revendications 1-8.

D'autres caractéristiques et avantages de l'invention apparaîtront mieux à la lecture de la description qui suit, tirée d'exemples donnés à titre illustratif et non limitatif, tirée des dessins sur lesquels :

- la figure 1 représente un schéma générique d'un dispositif selon l'invention, et
- la figure 2 représente un exemple de réalisation d'une fonction mise en oeuvre par le dispositif de la figure 1, et
- la figure 3 représente un exemple de réalisation d'une fonction mise en oeuvre dans la figure 2.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

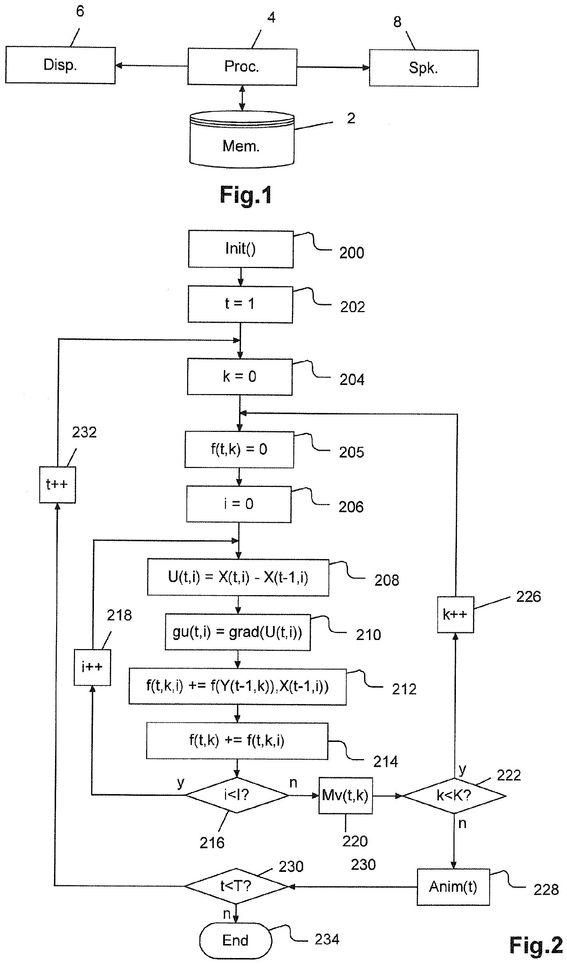

La figure 1 représente un schéma générique d'un dispositif de simulation selon l'invention. Le dispositif comprend une mémoire 2, un processeur 4, un affichage 6 et un haut-parleur 8.

Dans le cadre de l'invention, la mémoire 2 peut être tout type de stockage de données propre à recevoir des données numériques : disque dur, disque dur à mémoire flash (SSD en anglais), mémoire flash sous toute forme, mémoire vive, disque magnétique, stockage distribué localement ou dans le cloud, etc. Les données calculées par le dispositif peuvent être stockées sur tout type de mémoire similaire à la mémoire 2, ou sur celle-ci. Ces données peuvent être effacées après que le dispositif ait effectué ses tâches ou conservées.

Les données stockées dans la mémoire 2 sont de plusieurs natures. Ainsi, la mémoire 2 reçoit des données de son, des données de surface en trois dimensions, des données de contrôle, et elle peut également recevoir des données intermédiaires servant aux calculs réalisés par le processeur 4.

Les données de son ne sont pas nécessairement des données sonores. Ainsi, les données de son peuvent être des identifiants associés à des données sonores, ou encore à des données textuelles représentant le son que l'on cherche à représenter par l'animation, ou encore des données sonores ou textuelles ou tout autre type de données qui permettent d'associer l'animation qui est produite avec un ensemble de sons correspondant.

Les données de surface en trois dimensions sont des données permettant de définir une surface que l'on souhaite animer de manière synchrone avec les données de son. Ces données peuvent être de toute nature dès lors qu'elles permettent de décrire complètement chaque point de la surface que l'on souhaite animer. Elles peuvent donc comprendre des données d'identifiant et une pluralité de données de points de cette surface. Les données de point peuvent être par exemple des données de coordonnées. Certaines portions ou la totalité de la surface peuvent également être définies par des équations reliant les points entre eux. Les données de coordonnées peuvent également être définies de manière absolue ou relative, par rapport à un point de référence de la surface par exemple.

Les données de contrôle sont assemblées en jeux. Ces jeux contiennent des données qui désignent des coordonnées de points dits de contrôle. Ces points de contrôle sont pris sur la surface en trois dimensions, et servent de référence en rapport à des données de son. Ainsi, chaque jeu de données de contrôle définit l'emplacement des points de contrôle de la surface en trois dimensions pour des données de son auxquelles le jeu de données de contrôle est associé.

Le processeur 4 peut être tout processeur adapté au calcul d'une animation synchronisée avec une reproduction de sons sous forme sonore ou textuelle. Il peut être réalisé de toute manière connue, sous la forme d'un microprocesseur pour ordinateur personnel, d'une puce dédiée de type FPGA ou SoC (« system on chip » en anglais), d'une ressource de calcul sur une grille, d'un microcontrôleur, ou de toute autre forme propre à fournir la puissance de calcul nécessaire à la réalisation décrite plus bas.

L'affichage 6 peut être tout type d'affichage pouvant être relié au processeur 4 pour une reproduction visuelle de l'animation d'un visage (ou d'une autre surface) de manière synchrone avec des données de son, ainsi que les données de son lorsque celles-ci sont de nature textuelle. Le haut-parleur 8 peut être tout type de dispositif adapté à la reproduction sonore de données de son de type sonore.

La figure 2 représente un exemple de mise en oeuvre d'une fonction par le dispositif pour animer une surface en trois dimensions de manière synchrone avec des données de son.

Dans une première opération 200, le processeur 4 exécute une fonction Init(). La fonction Init() a pour fonction l'initialisation de la fonction d'animation, c'est-à-dire la récupération des données de son successives, des données de surface en trois dimensions et des données de contrôle associées aux données de son à partir de la mémoire 2.

Selon les variantes, et comme décrit plus haut, les données de son pourront être textuelles ou sonores, et pourront éventuellement être extraites d'autres données. Dans l'exemple décrit ici, les données de surface en trois dimensions et les données de contrôle associées aux données de son qui sont les premières dans la succession de données de son sont sensiblement correspondantes, de sorte que les points des premières données de contrôle ont des coordonnées qui sont sensiblement identiques aux coordonnées de ces points dans les données de surface en trois dimensions. Ainsi, les données de surface en trois dimensions ont une bonne correspondance avec les premières données de contrôle.

En variante, la mémoire 2 peut comprendre plusieurs données de surface en trois dimensions pour une surface en trois dimensions donnée, et le processeur 4 exécute une fonction pour choisir celles de ces données qui correspondent le mieux aux premières données de contrôle. Cela peut être fait de diverses manières, par exemple par désignation manuelle, par optimisation d'une distance, ou par application d'un bruit Gaussien et détermination d'un minimum local, ou autre.

Plusieurs boucles commencent alors. Ces boucles visent à calculer, pour chaque point des données de surface en trois dimensions, un déplacement qui est la somme de vecteurs déplacements calculés à partir du point des données de surface courant et de chacun des points de contrôle des données de contrôle.

Ainsi, dans une opération 202, la fonction d'animation débute par l'initialisation d'un indice t qui désigne la position des données de son dans la succession de données de son, puis dans une opération 204, un indice k est initialisé pour parcourir l'ensemble des points des données de surface en trois dimensions, et dans une opération 206, un indice i est initialisé pour parcourir les points de contrôle. Dans l'exemple décrit ici, la succession de données de son comprend T éléments, les données de surface en trois dimensions comprennent K points, et les données de contrôle comprennent I points. Dans ce qui suit, les points des données de contrôle sont désignés par la lettre X, et les points des données de surface en trois dimensions sont désignés par la lettre Y. Une variable de sommation f(t,k) est également initialisée à 0 dans une opération 205, entre les opérations 204 et 206. Cette variable sera décrite plus bas.

Les indices t, k et i définissent trois boucles imbriquées. La première boucle, basée sur l'indice i, va permettre de calculer les éléments nécessaires au calcul du déplacement d'un point des données de surface en trois dimensions d'indice k, pour l'instant d'indice t. La deuxième boucle, basée sur l'indice k, va permettre de répéter le calcul de la première boucle d'indice i, pour chaque point des données de surface en trois dimensions. Enfin, la troisième boucle, basée sur l'indice t, va permettre de répéter le calcul de la deuxième boucle d'indice k, pour chaque instant des données de son successives.

La première boucle commence dans une opération 208 par le calcul d'un vecteur U(t,i) qui correspond au déplacement du point de contrôle d'indice i entre les instants successifs désignés par les indices t-1 et t. Pour cela, le vecteur U(t,i) est calculé comme la différence des données de coordonnées du point de contrôle X(t,i) associées au point de contrôle d'indice i dans les données de contrôle associées aux données de son d'indice t, et des données de coordonnées du point de contrôle X(t-l,i) associées au point de contrôle d'indice i dans les données de contrôle associées aux données de son d'indice t-1.

Ensuite, dans une opération 210, un scalaire gu(t,i) est calculé par une fonction grad(). Le scalaire gu(t,i) est un coefficient dépendant du gradient du vecteur U(t,i). Dans une première variante, la fonction grad() calcule le gradient du vecteur U(t,i). Dans une seconde variante, la fonction grad() calcule le gradient du vecteur U(t,i), et le divise par un coefficient proportionnel à la distance entre le point de contrôle X(t-l,i) et le point des données de surface en trois dimensions courant Y(t-1,k). Cette deuxième variante vise à éviter une divergence lorsque les points Y(t-1,k) et X(t-1, i) sont très éloignés.

Ensuite, dans une opération 212, une fonction f() est appliquée aux points Y(t-1,k) et X(t-l,i), afin de calculer une première partie d'un coefficient de pondération. Dans l'exemple décrit ici, la fonction f() calcule l'inverse de la distance entre les points Y(t-l,k) et X(t-l,i) élevée au carré. Il convient de noter que le mot « distance » doit être entendu au sens mathématique du terme. Selon les variantes, la distance retenue pourra être la distance quadratique, la distance Euclidienne, ou encore une distance qui reflète la topologie de la surface en trois dimensions comme la distance géodésique, une distance tirée de la distance géodésique ou une autre distance connexe appropriée. D'une manière générale, la fonction f() est choisie de sorte qu'elle forme une fonction continue décroissante dont la limite est nulle à l'infini.

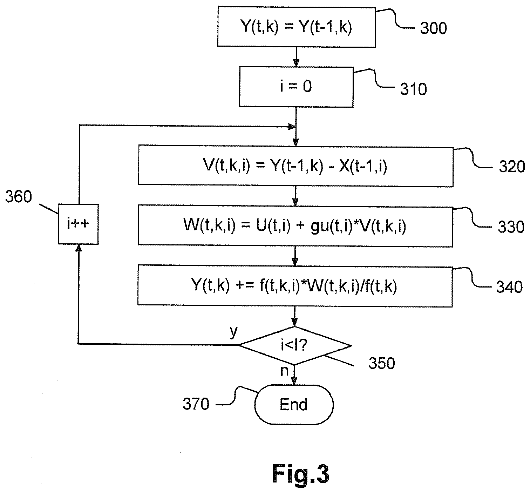

Dans une opération 214, la variable de sommation f(t,k) est mise à jour en lui ajoutant la valeur f(t,k,i) déterminée à l'opération 212. Comme on le verra avec la figure 3, la fonction f() et la variable de sommation f(t,k) permettent de définir une fonction de pondération qui varie en fonction des points de contrôle, qui est continue, qui converge à l'infini, et qui vaut 1 à chaque point de contrôle considéré.

La première boucle se termine dans une opération 216 dans lequel l'indice i est comparé au nombre de points de contrôle I. S'il reste des points de contrôle à parcourir, alors l'indice i est incrémenté dans une opération 218 et la première boucle reprend avec l'opération 206. Sinon, la première boucle se termine et la deuxième boucle courante se termine avec le calcul du déplacement du point X(t,k) par une fonction Mv(t,k) dans une opération 220.

La figure 3 représente un exemple de mise en oeuvre de la fonction Mv(t,k).

Lorsque tous les points de contrôle ont été parcourus, on obtient donc pour une deuxième boucle d'indice k donné :

- une pluralité de vecteurs de déplacement de point de contrôle U(t,i),
- une pluralité de coefficients liés au gradient de ces vecteurs gu(t,i),
- une pluralité de coefficients f(t,k,i) liés à la distance entre le point courant Y(t,k) et chaque point de contrôle X(t,i), et
- une variable f(t,k) qui contient la somme de tous les coefficients f(t,k,i).

Tous ces éléments vont permettre de calculer le déplacement d'un point des données de surface en trois dimensions entre un instant t-1 et un instant t.

Pour cela, dans une opération 300, le point d'indice k à l'instant t, c'est-à-dire Y(t,k) est défini avec les coordonnées de ce même point à l'instant t-1, c'est-à-dire des données de coordonnées du point Y(t-1,k).

Ensuite, une boucle va parcourir tous les points de contrôle pour ajouter chaque vecteur déplacement. Pour cela, l'indice i est initialisé à 0 dans une opération 310.

Dans chaque itération de la boucle, un vecteur déplacement lié au point de contrôle d'indice i courant est calculé. Ce vecteur déplacement correspond à la somme du vecteur déplacement du point de contrôle U(t,i) et d'un vecteur qui correspond à la différence entre le point Y(t-1,k) et le point de contrôle X(t-l,i) courant.

Ainsi, dans une opération 320, le vecteur V(t,k,i) qui correspond à la différence entre le point Y(t-1,k) et le point de contrôle X(t-l,i) courant est calculé par différence des données de coordonnées respectives de ces points.

Ensuite, dans une opération 330, le vecteur U(t,i) et le vecteur V(t,k,i) multiplié par le scalaire gu(t,i) sont additionnés pour définir un vecteur déplacement non pondéré W(t,k,i) associé au point de contrôle d'indice i.

Dans une opération 340, le vecteur déplacement non pondéré W(t,k,i) est pondéré par une valeur correspondant au ratio entre le coefficient f(t,k,i) liant le point de contrôle d'indice i et le point des données de surface en trois dimensions d'indice k, et la variable de sommation f(t,k) qui contient la somme des coefficients f(t,k,i).

Enfin, dans une opération 350, la fonction Mv(t,k) détermine si tous les indices i ont été parcourus. S'il reste des points de contrôle à parcourir, alors l'indice i est incrémenté dans une opération 360 et la boucle reprend dans l'opération 320. Sinon la fonction Mv() se termine dans une opération 370 avec le stockage du nouveau point Y(t,k) dont les données de coordonnées viennent d'être calculées.

Ainsi, pour chaque indice i, l'opération 340 déplace le point Y(t,k) par un vecteur déplacement lié au point de contrôle d'indice i qui présente la formule suivante :

$$\frac{f(t,k,i)}{\sum_j f(t,k,j)} \left( \overrightarrow{U(t,i)} + gu(t,i) * \overrightarrow{Y(t-1,k)X(t-1,i)} \right)$$

Pour simplifier, on peut définir la fonction de pondération liée au point de contrôle :

$$w(t,i,k) = \frac{f(t,k,i)}{\sum_j f(t,k,j)}$$

Lorsque tous les points de contrôle ont été parcourus, on a alors :

$$\overrightarrow{Y(t,k)Y(t-1,k)} = \sum_i w(t,i) \left( \overrightarrow{U(t,i)} + gu(t,i) * \overrightarrow{Y(t-1,k)X(t-1,i)} \right)$$

Or, soit Z() le champ de déplacement des points Y. On peut réécrire ce champ de déplacement d'indice k entre des instants t-1 et t comme la somme pondérée des déplacements des points de contrôle X(t-l,i) :

$$\overrightarrow{Z(Y,t-1,t,k)} = \sum_i z(t,i,k) \overrightarrow{Z(X(t-1,i) + (Y((t-1,k) - X(t-1,i)))}$$

où les z(t,i,k) forment une pluralité de fonctions de pondération telles que z(Y,t,i) vaut 1 si Y est le point de contrôle X(t-1,i), et telles que pour tout point Y, $\sum_i z(Y,t,i) = 1$

En faisant un développement limité autour de chaque point de contrôle X(t-l,i) cela donne :

$$\overrightarrow{Z(Y,t-1,t,k)}$$
$$= \sum_i z(Y,t,i) \left( \overrightarrow{Z(X,t-1,t,i)} + Grad(\overrightarrow{Z(X,t-1,t,i)} \right.$$
$$\left. * \overrightarrow{Y(t-1,k)X(t-1,i)} + o(\|\overrightarrow{Y(t-1,k)X(t-1,i)}\|) \right)$$

Soit :

$$\overrightarrow{Y(t,k)Y(t-1,k)}$$
$$= \sum_i z(t,i) \left( \overrightarrow{X(t,i) - X(t-1,i)} + gu(t,i) * \overrightarrow{Y(t-1,k)X(t-1,i)} \right.$$
$$\left. + o(\|\overrightarrow{Y(t-1,k)X(t-1,i)}\|) \right)$$

Or, en utilisant la définition de la fonction f(), on obtient une correspondance entre la pondération w(t,i,k) et les fonctions z(Y,t,i).

Le point Y(t,k) calculé par la fonction Mv() correspond donc bien au déplacement du point Y(t-1,k) au voisinage des points de contrôle dont le déplacement est connu.

La première variante de la fonction f() revient à négliger le terme $o(\|\underline{Y(t\text{-}1,k)X(t\text{-}_1,i)}\|$

La deuxième variante de la fonction f() permet de tenir compte du terme $o(\|Y(t\text{-}1,k)X(t\text{-}1,i)\|$, et peut s'écrire comme suit lorsque tous les points de contrôle ont été parcourus :

$$\overrightarrow{Y(t,k)Y(t-1,k)} = \sum_i w(t,i) \left( \overrightarrow{U(t,i)} + \frac{Grad(\overrightarrow{U(t,i)}) * \overrightarrow{Y(t-1,k)X(t-1,i)}}{1 + \left\|\overrightarrow{Y(t-1,k)X(t-1,i)}\right\|^{\alpha} / R^{\alpha}} \right)$$

où $\alpha$ est un coefficient réel supérieur à 1 et R est une distance caractérisant la résistance à la déformation de la surface en trois dimensions.

Une fois la fonction Mv() terminée, la deuxième boucle se termine est un test sur l'indice k dans une opération 222. S'il reste des points des données de surface en trois dimensions à parcourir, alors l'indice k est incrémenté dans une opération 224, et la deuxième boucle reprend avec la mise à 0 de la variable de sommation f(t,k) dans l'opération 205 et l'exécution de la première boucle pour le nouvel indice k.

Si tous les points des données de surface en trois dimensions ont été parcourus, alors une fonction Anim() est exécutée dans une opération 228. La fonction Anim() va générer l'animation de la surface en trois dimensions définie par les points Y entre les instants t-1 et t. Cette animation peut être réalisée de diverses manières. Dans l'exemple décrit ici, pour une seconde de données de son, la mémoire 2 contient 250 données de son et 250 jeux de données de contrôle associés. La fonction Anim() consiste donc à afficher successivement les images calculées.

Selon une première variante, plusieurs positions intermédiaires sont calculées par interpolation pour chaque point Y entre les instants t-1 et t en fonction de la durée des données de son associées et des données de coordonnées de chaque point Y aux instants t-1 et t. Le processeur assure l'affichage des images interpolées en synchronisation avec la reproduction des données de son correspondantes. Selon d'autres variantes, d'autres méthodes d'interpolation peuvent être utilisées comme une interpolation linéaire ou une interpolation basée sur des splines. Le choix de la méthode d'interpolation dépendra notamment du type de surface à animer et de l'animation considérée. Dans encore une autre variante, par exemple lorsque les données de son successives représentent des instants très proches, aucune interpolation n'est réalisée, et il est simplement passé des données de surface en trois dimensions à l'instant t-1 aux données de surface en trois dimensions à l'instant t.

Ensuite, dans une opération 230, le processeur 4 détermine si toutes les données de son ont été parcourues, et donc si la troisième boucle est terminée. Si ce n'est pas le cas, l'indice t est incrémenté dans une opération 232 et la troisième boucle recommence avec l'initialisation d'une deuxième boucle avec l'opération 204. Sinon, l'animation se termine dans une opération 234.

Les données de surface en trois dimensions sont donc calculées et animées de proche en proche, et en synchronisation avec les données de son par le biais des données de contrôle qui représentent un nombre réduits de points de la surface en trois dimensions pour chacune des données de son. Ainsi, à partir d'un nombre réduit de points de contrôle (21 dans l'exemple décrit ici), il devient possible d'animer une surface, par exemple le visage d'un personnage, de manière réaliste, même avec une très haute résolution d'affichage (pour un visage, 8 000 points dans l'exemple décrit ici), et avec un coût de calcul et de stockage réalistes. Ainsi, le ratio nombre de points de la surface en trois dimensions sur nombre de points de contrôle peut être supérieur à 50, 150, voire supérieur à 300.

Comme mentionné plus haut, ces données peuvent être des données qui permettent d'associer l'animation qui est produite avec un ensemble de sons correspondant. Plus généralement, les données de son peuvent être vues comme des données qui organisent dans le temps l'animation de la surface en trois dimensions.

## Revendications

1. Dispositif de traitement d'image pour la génération d'une information, comprenant une mémoire (2) stockant des données de son, des données de surface en trois dimensions, ainsi qu'une pluralité de jeux de données de contrôle, chaque jeu de données de contrôle représentant une pluralité de points de contrôle définis par des données de coordonnées et étant associé à des données de son, et un processeur (4) agencé, à partir de premières et secondes données de son successives, et de premières données de surface en trois dimensions, pour sélectionner les jeux de données de contrôle associés aux premières et secondes données de son, et pour définir de secondes données de surface en trois dimensions en appliquant un déplacement à chaque point des premières données de surface en trois dimensions,
le déplacement d'un point donné des premières données de surface en trois dimensions étant calculé comme la somme de vecteurs déplacements calculés pour chaque point de contrôle du jeu de données de contrôle associé aux premières données de son, **caractérisé en ce que**
chaque vecteur déplacement calculé pour un point de contrôle donné est calculé à partir de la somme d'un premier vecteur et d'un deuxième vecteur, laquelle somme est pondérée par un poids calculé comme le ratio entre le résultat d'une fonction à deux variables appliquée au point donné et au point de contrôle donné et la somme du résultat de cette fonction appliquée au point donné d'une part et à chacun des points de contrôle du jeu de données de contrôle associé aux premières données de son d'autre part, ladite fonction à deux variables associant à deux points une distance mathématique appliquée à ces deux points élevée à une puissance inférieure ou égale à -1,
le premier vecteur représente le déplacement de la position définie par les données de coordonnées du point de contrôle donné dans le jeu de données de contrôle associé aux premières données vers la position définie par les données de coordonnées du point de contrôle donné dans le jeu de données de contrôle associé aux secondes données de son, et
le deuxième vecteur correspond à la différence entre les données de coordonnées du point donné et les données de coordonnées du point de contrôle donné dans le jeu de données de contrôle associé aux premières données de son, multiplié par un coefficient dépendant du gradient du premier vecteur.

2. Dispositif selon la revendication 1, dans lequel la distance mathématique est choisie dans un groupe comprenant la distance Euclidienne, la distance quadratique et la distance géodésique.

3. Dispositif selon l'une des revendications précédentes, dans lequel le coefficient dépendant du gradient du premier vecteur est égal au gradient du premier vecteur.

4. Dispositif selon l'une des revendications 1 à 2, dans lequel le coefficient dépendant du gradient du premier vecteur est égal au gradient du premier vecteur divisé par une valeur proportionnelle à la distance entre le point de donné et le point de contrôle donné.

**5.** Dispositif selon la revendication 4, dans lequel la valeur proportionnelle correspond au ratio de la distance entre le point de donné et le point de contrôle donné par une constante de déformation supérieure à 1, ce ratio étant élevé à une puissance choisie et ajouté de un.

**6.** Dispositif selon la revendication 5 dans lequel la puissance choisie est supérieure ou égale à 1.

**7.** Dispositif selon l'une des revendications précédentes, dans lequel le ratio entre le nombre de points des données de surface en trois dimensions et le nombre de points dans un jeu de données de contrôle est supérieur à 50.

**8.** Produit de programme informatique, comprenant des portions de code de programme pour mettre en oeuvre le dispositif selon l'une des revendications 1 à 7 lorsque ledit programme est exécuté sur un ordinateur.

**Patentansprüche**

**1.** Bildverarbeitungsvorrichtung zum Erzeugen von Informationen, umfassend einen Speicher (2), der Tondaten, dreidimensionale Oberflächendaten und eine Vielzahl von Kontrolldatensätzen speichert, wobei jeder Kontrolldatensatz eine Vielzahl von Kontrollpunkten darstellt, die durch Koordinatendaten definiert und Tondaten zugeordnet sind, und einen Prozessor (4), der dafür eingerichtet ist, aus ersten und zweiten aufeinanderfolgenden Tondaten und ersten dreidimensionalen Oberflächendaten die Kontrolldatensätze auszuwählen, die den ersten und zweiten Tondaten zugeordnet sind, und zweite dreidimensionale Oberflächendaten zu definieren, indem an jedem Punkt der ersten dreidimensionalen Oberflächendaten eine Verschiebung angewandt wird,
wobei die Verschiebung eines gegebenen Punkts der ersten dreidimensionalen Oberflächendaten als Summe der Verschiebungsvektoren berechnet wird, die für jeden Kontrollpunkt des Kontrolldatensatzes berechnet werden, der den ersten Tondaten zugeordnet ist,
**dadurch gekennzeichnet, dass**
jeder für einen gegebenen Kontrollpunkt berechnete Verschiebungsvektor aus der Summe eines ersten Vektors und eines zweiten Vektors berechnet wird, wobei die Summe mit einem Gewicht gewichtet wird, das als Verhältnis berechnet wird zwischen dem Ergebnis einer Funktion mit zwei Variablen, angewandt auf den gegebenen Punkt und den gegebenen Kontrollpunkt, und der Summe des Ergebnisses dieser Funktion, angewandt auf den gegebenen Punkt einerseits und auf jeden der Kontrollpunkte des Kontrolldatensatzes, der den ersten Tondaten zugeordnet ist, andererseits, wobei die Zwei-Variablen-Funktion zwei Punkten einen mathematischen Abstand, angewandt auf diese zwei Punkte, zuordnet, der mit einem Wert kleiner oder gleich -1 potenziert wird,
wobei der erste Vektor die Verschiebung der Position, die definiert ist durch die Koordinatendaten des gegebenen Kontrollpunkts in dem Kontrolldatensatz, der den ersten Daten zugeordnet ist, zu der Position darstellt, die definiert ist durch die Koordinatendaten des gegebenen Kontrollpunkts in dem Kontrolldatensatz, der den zweiten Tondaten zugeordnet ist, und
wobei der zweite Vektor der Differenz zwischen den Koordinatendaten des gegebenen Punkts und den Koordinatendaten des gegebenen Kontrollpunkts in dem Kontrolldatensatz, der den ersten Tondaten zugeordnet ist, multipliziert mit dem vom Gradienten des ersten Vektors abhängige Koeffizient entspricht.

**2.** Vorrichtung nach Anspruch 1, wobei der mathematische Abstand aus einer Gruppe ausgewählt ist, die den euklidischen Abstand, den quadratischen Abstand und den geodätischen Abstand umfasst.

**3.** Vorrichtung nach einem der vorhergehenden Ansprüche, wobei der vom Gradienten des ersten Vektors abhängige Koeffizient gleich dem Gradienten des ersten Vektors ist.

**4.** Vorrichtung nach einem der Ansprüche 1 bis 2, wobei der vom Gradienten des ersten Vektors abhängige Koeffizient gleich dem Gradienten des ersten Vektors geteilt durch einen Wert ist, der proportional zum Abstand zwischen dem Datenpunkt und dem gegebenen Kontrollpunkt ist.

**5.** Vorrichtung nach Anspruch 4, wobei der proportionale Wert dem Verhältnis des Abstands zwischen dem Datenpunkt und dem Kontrollpunkt entspricht, gegeben durch eine Verformungskonstante größer als 1, wobei dieses Verhältnis mit einem gewählten Wert potenziert und um eins erhöht wird.

**6.** Vorrichtung nach Anspruch 5, wobei die gewählte Potenz größer oder gleich 1 ist.

**7.** Vorrichtung nach einem der vorhergehenden Ansprüche, wobei das Verhältnis zwischen der Anzahl von Punkten der dreidimensionalen Oberflächendaten und der Anzahl von Punkten in einem Kontrolldatensatz größer als 50 ist.

8. Computerprogrammprodukt, umfassend Programmcodeteile zum Implementieren der Vorrichtung nach einem der Ansprüche 1 bis 7 bei Ausführung des Programms auf einem Computer.

**Claims**

1. An image processing device for generating an information, comprising a memory (2) storing sound data, three-dimensional surface data, and a plurality of control data sets, each control data set representing a plurality of control points defined by coordinate data and being associated with sound data, and a processor (4) arranged, on the basis of first and second successive sound data, and of first three-dimensional surface data, for selecting control data sets associated with the first and second sound data, and for defining second three-dimensional surface data by applying a displacement to each point of the first three-dimensional surface data,

   the displacement of a given point of the first three-dimensional surface data being calculated as the sum of displacement vectors calculated for each control point of the control data set associated with the first sound data,

   **characterized in that**

   each displacement vector calculated for a given control point is calculated on the basis of the sum of a first vector and a second vector, which sum is weighted by a weight calculated as the ratio between the result of a two variable function applied to the given point and to the given control point and the sum of the result of this function applied to the given point on the one hand and to each of the control points of the control data set associated with the first sound data on the other hand, the two variable function associating with two points a mathematical distance applied to these two points raised to a chosen power less than or equal to -1,

   the first vector represents the displacement of the position defined by the coordinate data of the given control point in the control data set associated with the first data to the position defined by the coordinate data of the given control point in the control data set associated with the second sound data, and

   the second vector corresponds to the difference between the coordinate data of the given point and the coordinate data of the given control point in the control data set associated with the first sound data, multiplied by a coefficient dependent on the gradient of the first vector.

2. The device as claimed in claim 1, in which the mathematical distance is chosen from a group comprising the Euclidean distance, the quadratic distance and the geodesic distance.

3. The device as claimed in one of the preceding claims, in which the coefficient dependent on the gradient of the first vector is equal to the gradient of the first vector.

4. The device as claimed in one of claims 1 through 2, in which the coefficient dependent on the gradient of the first vector is equal to the gradient of the first vector divided by a value proportional to the distance between the given point and the given control point.

5. The device as claimed in claim 4, in which the proportional value corresponds to the ratio of the distance between the given point and the given control point by a deformation constant greater than 1, this ratio being raised to a chosen power plus one.

6. The device as claimed in claim 5, in which the chosen power is greater than or equal to 1.

7. The device as claimed in one of the preceding claims, in which the ratio between the number of three-dimensional surface data points and the number of points in a control data set is greater than 50.

8. A computer program product, comprising program code portions for implementing the device as claimed in one of claims 1 through 7 when said program is executed on a computer.

Disp. 6

Proc. 4

Spk. 8

Mem. 2

**Fig.1**

Init() 200

t = 1 202

k = 0 204

f(t,k) = 0 205

i = 0 206

U(t,i) = X(t,i) - X(t-1,i) 208

gu(t,i) = grad(U(t,i)) 210

f(t,k,i) += f(Y(t-1,k)),X(t-1,i)) 212

f(t,k) += f(t,k,i) 214

t++ 232

i++ 218

k++ 226

i<I? 216

Mv(t,k) 220

k<K? 222

Anim(t) 228

t<T? 230

230

230

End 234

**Fig.2**

| Y(t,k) = Y(t-1,k) | — 300 |

| i = 0 | — 310 |

| V(t,k,i) = Y(t-1,k) - X(t-1,i) | — 320 |

360 — | i++ |

| W(t,k,i) = U(t,i) + gu(t,i)*V(t,k,i) | — 330 |

| Y(t,k) += f(t,k,i)*W(t,k,i)/f(t,k) | — 340 |

y

i<I? — 350

370 — End

n

**Fig.3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0710929 A2
- US 2010259538 A1
- JP 2007299300 B

**Littérature non-brevet citée dans la description**

- **G. FELDHOFFER et al.** An efficient voice driven face animation method for cyber telepresence applications. *Applied Sciences in Biomédical and Communication Technologies,* 24 Novembre 2009
- **C. LUO et al.** Realtime speech-driven facial animation using Gaussian Mixture Models. *IEEE International Conférence on Multimedia and Expo,* 14 Juillet 2014
- NURBS Curve Controlled Modelling for Facial Animation. **D. HUANG et al.** Computer and Graphics. Elsevier, 01 Juin 2003
- **M. UTPALA et al.** Facial 3D Shape Estimation from Images for Visual Speech Animation. *IEEE International Conference on Pattern Recognition,* 24 Août 2014